Europäisches Patentamt

European Patent Office

Office européen des brevets

(11) Numéro de publication: **0 459 345 A1**

## DEMANDE DE BREVET EUROPEEN

(21) Numéro de dépôt: **91108567.8**

(22) Date de dépôt: **27.05.91**

(51) Int. Cl.5: **G06F 15/40**

(30) Priorité: **29.05.90 FR 9006651**

(43) Date de publication de la demande:
**04.12.91 Bulletin 91/49**

(84) Etats contractants désignés:
**AT BE CH DE DK ES FR GB IT LI NL SE**

(71) Demandeur: **ALCATEL CIT**
**12 Rue de la Baume**
**F-75008 Paris(FR)**

(72) Inventeur: **Delory, Jean-Michel**
**82, Route des Charnes**
**F-78320 Levis St. Nom(FR)**

(74) Mandataire: **Weinmiller, Jürgen et al**
**Lennéstrasse 9 Postfach 24**
**W-8133 Feldafing(DE)**

(54) **Procédé de gestion d'un réseau de bases de données.**

(57) Il assure la cohérence des modifications de données dans un réseau de bases de données comportant : une base de données relationnelle (4) qui constitue une référence; et au moins une base de données accessible en temps réel (7); les données de la base de données relationnelle (4) étant répliqués au moins en partie dans des bases de données accessibles en temps réel (7).

Pour permettre à un processus d'application (22 à 24) de modifier des données dans tous le réseau, le procédé consiste à :
- envoyer du processus d'application (22 à 24), à un pool de processus serveurs (26, 27) d'un système d'exploitation de la base de données relationnelle (4), une requête de modification de données, en langage SQL;
- assigner un processus serveur à cette requête pour toute la durée de son traitement;
- envoyer du pool de processus serveurs (26, 27) à un système de gestion (3) de la base de données relationnelle (4), la requête de modification, en langage SQL dynamique; et exécuter cette requête;
- déterminer les bases de données, accessibles en temps réel (7), qui sont concernées par la requête de modification;
- leur transférer cette requête sous une forme compatible avec un système de gestion (6) de chaque base de données concernée (7);
- exécuter la requête de modification, dans chaque base de données concernée.

Application aux réseaux intelligents de télécommunication.

EP 0 459 345 A1

FIG. 3

L'invention concerne un procédé de gestion d'un réseau de bases de données, cette gestion ayant pour but de maintenir la cohérence des données contenues dans les différentes bases du réseau.

Un tel réseau de bases de données est utilisé notamment dans un réseau intelligent de télécommunication. Un réseau intelligent de télécommunication permet de proposer facilement de nouveaux services aux usagers, grâce à une architecture particulière qui comporte des autocommutateurs, d'une part, et des machines spécialisées, d'autre part. Ces machines spécialisées contrôlent les services rendus par le réseau. L'introduction de nouveaux services consiste à modifier les logiciels et les données de ces machines spécialisées. Les autocommutateurs du réseau ne sont pas affectés. L'introduction de nouveaux services est donc facilitée.

Ces machines spécialisées sont :
- un point de contrôle des services de gestion (PCS-G), qui est le centre du réseau pour la gestion des données;
- des points de contrôle des services réseau (PCS-R) qui sont des noeuds où les données sont utilisées pour rendre des services.

Les appels utilisant les services du réseau intelligent sont acheminés vers des autocommutateurs spécialisés, appelés autocommutateurs d'accès aux services, qui interrogent un PCS-R pour rendre les services attendus. Par exemple, un commutateur d'accès aux services peut interroger un PCS-R pour obtenir la traduction d'un numéro de libre appel en un numéro d'annuaire.

Les principaux intervenants sur les données gérées par le réseau intelligent de télécommunication sont :
- le fournisseur d'un service, qui gère les données résultant des contrats passés avec les abonnés au service;
- les abonnés à un service; par exemple, les abonnés au libre appel ont la possibilité de modifier certaines données du service, telles que les heures de renvoi des appels;
- les utilisateurs d'un service, ceux-ci utilisant des données du service; par exemple, lorsque des utilisateurs appellent un numéro de libre appel, les données du service sont utilisées pour traduire le numéro appelé en un numéro d'annuaire.

Dans un type connu de réseau intelligent, les données des services sont stockées et gérées dans :
- une base de données, relationnelle, située dans le PCS-G, et gérée par un système de gestion de base de données relationnelle (SGBDR); les données de cette base étant manipulées par les programmes de gestion des abonnements, sous le contrôle du fournisseur de service, et par les programmes de gestion des accès des abonnés, sous le contrôle des abonnés;
- des bases de données, accessibles en temps réel, situées respectivement dans les PCS-R, et gérées chacune par un système de gestion de données en temps réel (SGDTR); ces bases de données étant accessibles en temps réel pour être manipulées par des programmes qui rendent les services offerts par le PCS-R, par exemple pour traduire un numéro de libre appel en un numéro d'annuaire.

La base de données relationnelle située dans le PCS-G constitue une base de données de référence. Les données constituant les bases de données des PCS-R sont des données de la base de données du PCS-G qui sont soit répliquées, soit distribuées, dans les différents PCS-R. Elles peuvent être réparties dans les bases de données selon les trois types de répartition suivants :
- une table de la base de données de référence n'a de copie que dans la base de données d'un seul PCS-R si le service auquel elle se rapporte n'est rendu que dans un seul PCS-R;
- une table de la base de données de référence a des copies dans les bases de données de plusieurs PCS-R, si le service auquel elle se rapporte est rendu en partage de trafic, par plusieurs PCS-R, la table étant dite répliquée;
- une table de la base de données de référence a des copies partielles dans les bases de données de plusieurs PCS-R, si le service auquel elle se rapporte est rendu en partage de ressources, par ces PCS-R, la table étant dite distribuée.

La gestion des données est assurée par :
- un système de gestion de base de données relationnelle (SGBDR) localisé uniquement dans le PCS-G;
- un système de gestion de données en temps réel (SGDTR) localisé dans le PCS-G et dans chacun des PCS-R.

Ces deux systèmes de gestion de données permettent de définir des données de la même manière. On appelle "table" : des données structurées qui sont gérées par ces systèmes de gestion. Il en résulte que le SGBDR et le SGTR peuvent partager un même modèle logique de données, bien que ces systèmes aient des organisations physiques différentes, et des langages de manipulation de données différents. Le SGBDR possède le langage SQL (Structured Query Language), classiquement utilisé pour la gestion des bases de données, et qui est normalisé par l'American National Standards Institute. Le SGDTR possède un jeu de primitives orienté vers le temps réel. Du point de vue de la gestion des données, un réseau intelligent de télécommunication est donc un réseau hétérogène de bases de données. La complexité de réalisation des processus d'application intervenant sur les données dépend des caractéristiques du gestionnaire du réseau de bases de données. Cette réalisation peut être complexe si le gestionnaire laisse apparaître aux processus d'application la nature hétérogène du réseau.

La répartition des données dans plusieurs bases distinctes conduit à prévoir un logiciel appelé gestionnaire du réseau de bases de données (GRBD), mettant en oeuvre un procédé de gestion des données garantissant leur cohérence lorsque des processus d'application, tels que les programmes de gestion des abonnements, utilisés par le fournisseur d'un service, émettent des requêtes de modification de données. La complexité de réalisation des processus d'application intervenant sur les données dépend des caractéristiques du gestionnaire du réseau de bases de données. Cette réalisation peut être complexe si le gestionnaire laisse apparaître aux processus d'application la nature hétérogène du réseau.

Un premier but de l'invention est de proposer un procédé de gestion qui cache aux processus d'application la multiplicité des systèmes de gestion des données, et les différences de langages de manipulation de données, en permettant aux processus d'application de modifier des données dans toutes les bases de données au moyen d'un seul type de requête.

Selon l'invention, un procédé de gestion d'un réseau de bases de données, comportant une base de données relationnelle qui constitue une référence et au moins une base de données accessible en temps réel, les données de la base de données relationnelle étant répliquées au moins en partie dans des bases de données accessibles en temps réel, est caractérisé en ce que pour permettre à un processus d'application de modifier des données dans tout le réseau de bases de données, il consiste à :

- envoyer du processus d'application, à un pool de processus serveurs d'un système d'exploitation de la base de données relationnelle, une requête de modification de données, en langage SQL;
- assigner un processus serveur à cette requête pour toute la durée de son traitement;
- envoyer du pool de processus serveurs à un système de gestion de la base de données relationnelle, la requête de modification, en langage SQL dynamique; et exécuter cette requête;
- déterminer les bases de données, accessibles en temps réel, qui sont concernées par la requête de modification;
- leur transférer cette requête sous une forme compatible avec un système de gestion de chaque base de données concernée;
- exécuter la requête de modification, dans chaque base de données concernée.

Le procédé ainsi caractérisé permet aux processus d'application de ne voir qu'une seule base de données, la base de données relationnelle, en utilisant un seul type de requête, en langage SQL.

Un second but de l'invention est de proposer un procédé permettant en outre aux processus d'application de demander une exécution différée des modifications de données dans les bases de données accessibles en temps réel. Par exemple, dans le cas du libre appel, il est souhaitable que la mise en service d'un numéro coïncide avec la mise en service d'un groupe d'opératrices ou avec le lancement d'une campagne publicitaire. La date de la mise à jour de la copie des données opérationnelles du service, dans un PCS-R, est donc un paramètre qui doit être défini sous le contrôle du processus d'application.

Un troisième but de l'invention est de proposer un procédé de gestion permettant en outre d'assurer qu'une requête de modification est effectivement exécutée dans tout le réseau de bases de données malgré une éventuelle indisponibilité d'une ou plusieurs liaisons vers des PCS-R, sachant que l'indisponibilité prévisionnelle des liaisons et des noeuds du réseau intelligent respecte des normes téléphoniques déterminées.

Un quatrième but de l'invention est de proposer un procédé de gestion permettant en outre de vérifier la cohérence de données dans tout le réseau, pour détecter des anomalies dûes, par exemple, à une exécution erronée d'une requête de modification.

Les procédés caractérisés dans les revendications 2, 3, 4 permettent d'atteindre respectivement : le deuxième, le troisième, et le quatrième but mentionnés précédemment.

L'invention sera mieux comprise et d'autres détails apparaîtront à l'aide de la description ci-dessous et des figures l'accompagnant :
- la figure 1 représente le schéma synoptique d'un exemple de réseau intelligent de télécommunication;
- la figure 2 représente le schéma fonctionnel de cet exemple de réseau, muni d'un gestionnaire de réseaux de bases de données, pour mettre en oeuvre le procédé selon l'invention;
- la figure 3 représente un schéma fonctionnel plus détaillé de ce gestionnaire, et sa répartition dans les points de commande de service de cet exemple de réseau intelligent;

- la figure 4 représente un schéma fonctionnel détaillé d'une partie de ce gestionnaire.

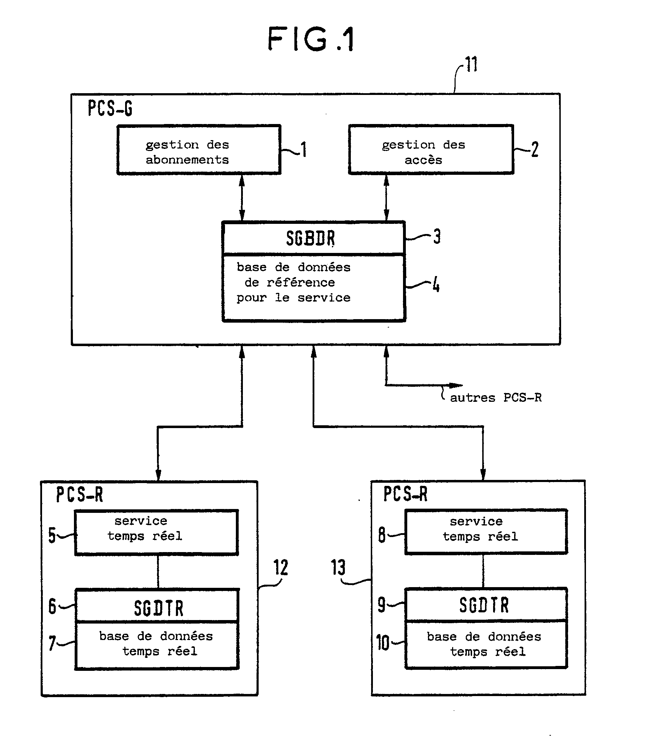

L'exemple de réseau intelligent de télécommunication qui est représenté sur la figure 1 comporte : un PCS-G 11; et une pluralité de PCS-R : 12, 13, etc, reliés au PCS-G 11 par des liaisons conformes au protocole n°7 du CCITT.

Le PCS-G 11 met en oeuvre : des processus d'applications, notamment des programmes de gestion des abonnements, 1, et des programmes de gestion des accès, 2; un SGBDR, 3; et une base de données relationnelle 4 qui constitue une référence pour chaque service. Le PCS-R 12 met en oeuvre des processus d'applications 5, constitués de programmes rendant des services en temps réel; un SGDTR, 6; et une base de données, 7, accessible en temps réel. Les autres PCS-R sont analogues au PCS-R 12. Le PCS-R 13 met en oeuvre : des processus d'application 8, constitués de programmes rendant des services en temps réel; un SGDTR, 9; et une base de données, 10, accessible en temps réel.

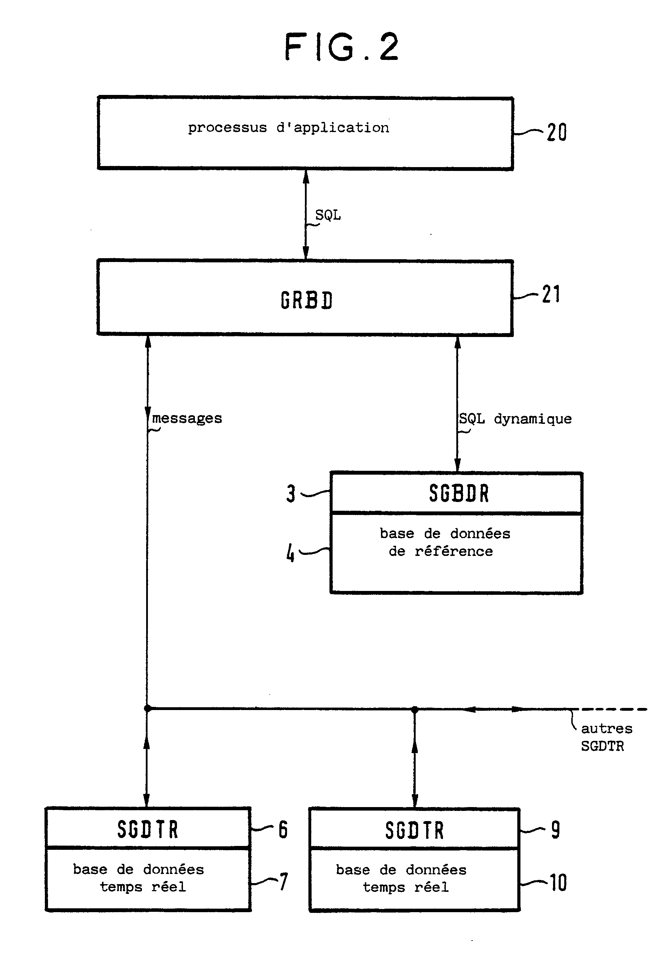

La figure 2 représente un schéma fonctionnel du même réseau, mais avec l'introduction d'un GRBD, 21, pour mettre en oeuvre le procédé selon l'invention. Un processus d'application 20 envoie au GRBD 21, une requête de modification de données, sous la forme de chaînes de caractères en langage SQL. Le GRBD 21 envoie alors une requête similaire au SGBDR 3 associé à la base de données de référence, 4, en utilisant une interface SQL dynamique du SGBDR, cette interface permettant d'exécuter une requête contenue dans une chaîne de caractères en langage SQL. Lorsque la modification a effectivement été réalisée dans la base de données de référence, 4, le GRBD21 détermine une liste des bases de données, 7, 10, etc, accessibles en temps réel, qui sont concernées par la modification. Puis il envoie des messages, transférant la même requête de modification de données, aux SGDTR, 6, 9, etc, associés respectivement aux bases de données 7, 10, etc, qui sont concernées. Chaque chaîne de caractères traduisant une requête est analysée par le GRBD 21, de façon à déterminer : le type de la requête, le nom de la table à modifier, le nom des colonnes de la table à modifier, et les valeurs de ces colonnes. La requête est mise sous la forme de primitives des SGDTR. Le GRBD 21 peut transmettre, avec la modification de données, un évènement permettant de déclencher une action d'un programme de service en temps réel, en relation et en synchronisme avec l'éxécution de la modification des données.

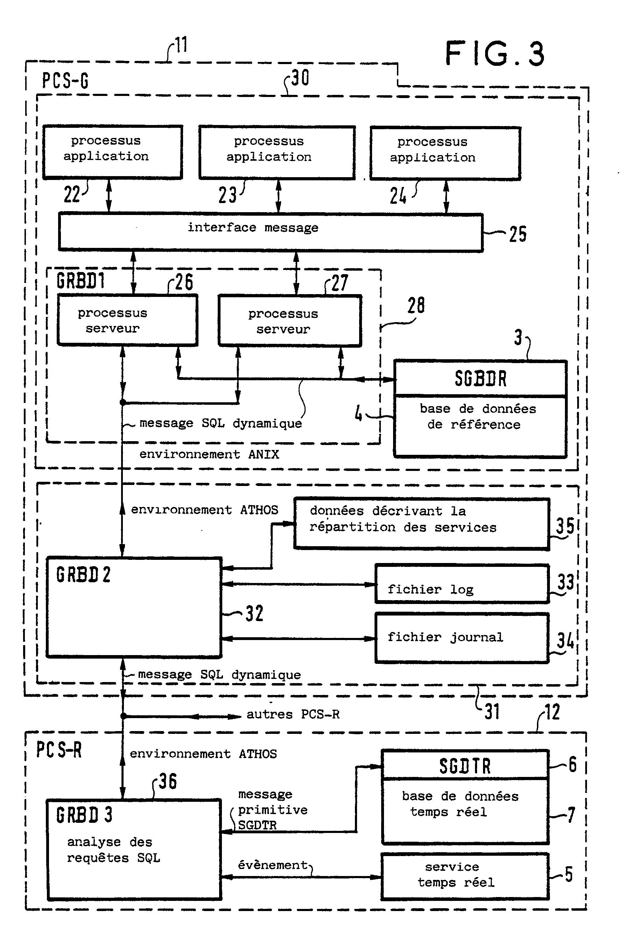

La figure 3 représente un schéma fonctionnel de ce réseau intelligent, montrant plus en détail l'architecture fonctionnelle du GRBD 21. Pour plus de clarté, le PCS-R 12 est le seul PCS-R représenté. Le PCS-G 11 est une machine hybride qui possède deux systèmes d'exploitation :

- ANIX qui est une implémentation du système d'exploitation UNIX, commercialisé par la société ATT BELL LABORATORIES USA, sur une machine ALCATEL 8300 commercialisée par la société ALCATEL CIT;
- ATHOS qui est un système d'exploitation en temps réel, conçu pour le traitement d'appels, et commercialisé par ALCATEL CIT.

Le GRBD 21 comporte 3 modules, 28, 32, 36, notés : GRBD1, GRBD2, et GRBD3. Le premier module et le second module sont mis en oeuvre dans le PCS-G 11, respectivement dans un environnement ANIX, 30, et dans un environnement ATHOS, 31. Le troisième module est mis en oeuvre dans chacun des PCS-R, notamment le PCS-R 12, dans un environnement ATHOS.

Le SGBDR, 3, qui est associé à la base de données de référence, 4, dans le PCS-G 11, est éxécuté dans l'environnement ANIX. Les SGDTR 6, etc, sont éxécutés dans l'environnement ATHOS. Les PCS-R, 12, etc, qui sont des machines fonctionnant en temps réel, possèdent uniquement le système d'exploitation ATHOS.

Le module GRBD1 est constitué d'un pool de processus ANIX, 2 6 et 27, appelés processus serveurs. Ils réalisent des accès au SGBDR 3 demandés par des processus d'application, 22 à 24. Les processus serveurs 26, 27 communiquent avec les processus d'application, 20 à 24, par l'intermédiaire d'une interface message, 25. Les messages fournis par les processus d'application 22 à 24 sont présentés en langage SQL. Les processus serveurs, 26 à 28, retransmettent ces messages au SGDR 3, sous la forme SQL dynamique; et ils élaborent d'autres messages, destinés aux SGDTR 6; etc. Ces messages sont constitués de primitives des SGDTR, contenant les modifications à reporter dans la base de données 7 du PCS-R 12, etc. Ces messages transitent par le module GRBD 2, 32, qui, lui, est exécuté dans l'environnement ATHOS.

Les processus serveurs, 26, 27, et les processus d'application, 22 à 24, utilisent les appels du système d'exploitation ANIX pour échanger des messages à travers deux files d'attente de l'interface message 25. Pour accéder aux données de la base de données de référence 4, un processus d'application, 22 par exemple, place dans une première file d'attente un message contenant sa requête d'accès, puis se met en attente de réponse sur une seconde file d'attente.

Les processus serveurs qui sont libres se placent en attente de requête sur la première file d'attente. Ils postent leurs réponses dans la seconde file d'attente.

Une requête peut être notamment un ordre de sélection de lignes dans une table, ou bien une transaction. On appelle transaction une suite d'opérations, essentiellement des modifications de données, qui est réalisée dans la base de données relationnelle 4, par l'intermédiaire de son SGBDR 3. Les opérations de gestion qui peuvent être réalisées sur une transaction sont les suivantes :
- une opération d'ouverture;
- une opération d'exécution effective de la suite de modifications constituant la transaction;
- une opération d'avortement de cette suite de modification de données, s'il y a eu un incident.

Chaque processus serveur, 26, 27 peut traiter une requête provenant de n'importe quel processus d'application. Mais, lorsqu'une requête nécessite plusieurs échanges de messages, un processus serveur déterminé est assigné au processus d'application ayant fait cette requête, pour toute la durée du traitement de cette requête, afin que ce traitement soit cohérent. Cette assignation est réalisée dans les cas suivants :
- Lorsqu'un processus d'application émet un ordre de sélection de lignes d'une table et que la réponse nécessite plusieurs messages de réponse. En effet, l'interface message 25 n'impose pas au processus d'application le nombre de lignes qu'un ordre de sélection peut sélectionner dans une table. Un ordre peut donc sélectionner un nombre de lignes nécessitant plusieurs messages de réponse. La taille des messages est un paramètre de la configuration du système. Il n'est pas certain qu'un seul message de réponse suffise pour contenir toutes les données lues, quel que soit l'ordre de sélection. Le processus serveur détermine donc si un message suffit, ou non, pour transférer les lignes sélectionnées. Dans le cas où plusieurs messages sont nécessaires, il en informe le processus dans un message de réponse, puis il se place en attente d'une demande appelant les messages de réponse suivants. Un processus serveur déterminé est donc asservi au processus d'application qui a émis un tel ordre de sélection. Le processus d'application a la possibilité de demander la suite de la réponse quand il le désire.
- Lorsqu'un processus d'application ouvre une transaction Chaque transaction est toujours constituée de plusieurs messages. Ces messages doivent être traités par un même processus serveur, pour garantir la cohérence.

Dans les deux cas, l'assignation d'un processus serveur à un processus d'application déterminé est réalisée en échangeant, dans les messages, l'identité du processus d'application et l'identité du processus serveur.

Le contenu des messages échangés à travers les deux files d'attente de l'interface message 25 est le suivant.

Un message adressé par un processus d'application à un processus serveur, pour un ordre de sélection de lignes, contient :
- un type de message, qui contient une valeur conventielle pour indiquer qu'aucun processus serveur particulier n'est désigné;
- un code d'opération, qui indique qu'il s'agit d'un ordre de sélection;
- l'identité du processus d'application;
- un ordre de sélection, sous la forme d'une chaîne de caractères, comportant une clé dans laquelle toutes les colonnes ont une valeur.

Un message adressé par un processus d'application à un processus serveur pour demander la suite d'une réponse, contient :
- un type de message, qui contient l'identité du processus serveur assigné, c'est-à-dire qui a commencé à prendre en charge la requête et qui est donc désigné pour continuer;
- un code d'opération, qui indique qu'il s'agit de demander la suite d'une réponse;
- une référence désignant l'opération, cette référence ayant été crée par le processus serveur.

Un message adressé par un processus d'application à un processus serveur, pour demander l'ouverture d'une transaction contient :
- un type de message, qui contient une valeur conventielle pour indiquer qu'aucun processus serveur particulier n'est désigné;
- un code d'opération, qui indique qu'il s'agit d'une demande d'ouverture de transaction;
- l'identité du processus d'application;
- la date à laquelle les modifications constituant cette transaction doivent être faites dans les PCS-R;
- éventuellement, la désignation d'un évènement permettant de déclencher une action d'un programme de service en temps réel, cette action devant être en synchronisme avec des modifications des données dans les PCS-R.

Un message adressé par un processus d'application à un processus serveur, pour un ordre de transaction, contient :
- un type de message, qui contient l'identité du processus serveur assigné;
- un code d'opération, qui indique qu'il s'agit d'une transaction en cours ou bien qu'il s'agit de la fin d'une transaction;
- l'identité du processus d'application;
- une référence désignant la transaction, cette référence étant crée par le processus serveur;

- un ordre, présenté en langage SQL dynamique, sous la forme d'une chaîne de caractères comportant une clé d'accès dans laquelle toutes les colonnes ont une valeur.

Un message adressé par un processus serveur à un processus d'application, pour la réponse à un ordre de sélection, contiennent :

- un type de message, qui contient l'identité du processus d'application;
- un code d'opération, qui indique qu'il s'agit d'une réponse simple ou qu'il s'agit d'une réponse constituée de plusieurs messages de réponse;
- l'identité du processus serveur et la référence de l'opération, s'il y a plusieurs messages de réponse;
- la référence de la transaction, si l'Ordre est inclus dans une transaction;
- des données lues dans une base de données.

Un message adressé par un processus serveur à un processus d'application, pour répondre à un ordre de modification contient :

- un type de message, qui contient l'identité du processus d'application;
- un code d'opération, qui rappelle de quel type d'opération il s'agit, et qui indique si elle s'est bien déroulée ou non;
- l'identité du processus serveur;
- la référence de la transaction.

Un message adressé par un processus serveur à un processus d'application, pour répondre à un ordre de gestion d'une transaction contient :

- un type de message, qui contient l'identité du processus d'application;
- un code d'opération, qui rappelle le type d'opération dont il s'agit et qui indique si elle s'est bien déroulée ou non;
- l'identité du processus serveur;
- la référence de la transaction.

Les processus serveurs, 26 et 27, du module GRBD1, 28, et les processus d'applications, 22 à 24, exécutent les traitements suivants. Les processus serveurs libres sont chaînés en attente dans la première file d'attente de l'interface message 25. Un processus d'application demande un accès aux données en postant un message dans la première file d'attente; puis en se plaçant en attente de réponse sur la seconde file d'attente, en effectuant un appel au système d'exploitation ANIX, dans un mode bloquant l'exécution de ce processus d'application jusqu'à la réception d'un message de réponse contenant un type de message contenant l'identité de ce processus d'application.

Quand un processus serveur, 26 ou 27, reçoit un ordre de sélection de lignes de données dans une table, cet ordre est sous la forme d'une chaîne de caractères en langage SQL. Le processus serveur met cet ordre sous la forme d'une chaîne de caractères au format du langage SQL dynamique, et lui adjoint un descripteur, puis l'envoie au SGBDR 3. Ce dernier lui fournit des lignes de données lues dans la base de référence 4. Le processus serveur transfère au processus d'application les données lues, dans un message de réponse, en utilisant des formats fournis dans le descripteur. Si plusieurs messages sont nécessaires, le processus serveur l'indique dans sa réponse et se met en attente sur la première file d'attente, en attendant une demande de suite, envoyée par le processus d'application.

Quand un processus serveur, 26 ou 27, reçoit une demande d'ouverture de transaction, il crée une référence interne pour cette transaction. Il indique, dans un contexte associé à la transaction : la date fixée pour l'exécution effective des modifications; et éventuellement un événement permettant de déclencher une action. Il envoie, en retour au processus d'application, un message d'acceptation, et il se place dans la première file d'attente.

Quand un processus serveur, 26 ou 27, reçoit un ordre de modification de données, il vérifie la référence de la transaction, puis il transmet l'ordre de modification au SGBDR 3. Si l'ordre a été exécuté sans erreur, le processus serveur enregistre cette information dans le contexte de la transaction puis il envoie au processus d'application un message de fin d'ordre, et il se place dans la première file d'attente.

Quand un processus serveur, 26 ou 27, reçoit un ordre de fin de transaction, c'est-à-dire un ordre commandant l'avortement d'une modification de données ou bien un ordre d'exécution effective d'une modification de données, il vérifie la référence du contexte, et transmet l'ordre au SGBDR 3. Si l'ordre est un ordre d'exécution effective et s'il a été exécuté sans erreurs, le processus serveur envoie au GRBR 2 un message de mise à jour contenant tous les ordres de modifications qui sont l'objet de la transaction. Si l'ordre est un ordre d'avortement des modifications qui sont l'objet de la transaction, le processus serveur n'envoie pas au GRBD 2 le message de mise à jour.

Enfin, il envoie au processus d'application un message de fin d'ordre, et il se place dans la première file d'attente en attente d'une nouvelle requête.

Le module GRBD2, 32, est associé à deux fichiers 33 et 34, appelés fichier log et fichier journal des modifications différées; et est associé à des données 35 décrivant la répartition des services dans les PCS-R. Les fonctions des moyens 33 à 35 apparaîtront plus loin.

Le module GRBD2 est chargé de déterminer les PCS-R qui sont concernés par chaque requête de modification de données, et de leur transférer ces requêtes de modification, avec une date paramètrable, pour leur exécution. Accessoirement, il assure une fonction d'audit pour vérifier que les données sont cohérentes dans tout le réseau. Il communique avec le module GRBDR1, 28, par une cession interne conforme au protocole X215 qui présente l'interface cession normale mais qui n'implémente pas les couches basses.

Le troisième module GRBD3, 36, est exécuté dans chaque PCS-R, 12, etc, dans l'environnement ATHOS, pour mettre à jour des tables de la base de données, 7, etc, par l'intermédiaire des SGDTR, 6, etc. Ce module communique avec le module GRBD2, 32, par une cession normale, conforme au protocole X215, qui implémente toutes les couches basses. Accessoirement, il transmet un évènement ayant un rapport avec la modification en cours, à un programme de service exécuté en temps réel, 5, pour commander une action en synchronisme avec une modification des données.

Pour effectuer une modification dans les tables de la base de données 7, gérée par le SGDTR 6, le module GRBD 3 analyse chaque ordre en langage SQL en recherchant :

- le nom de l'opération;
- le nom de la table;
- le nom de toutes les colonnes, de la table, concernées par la modification;
- les valeurs de ces colonnes, reçues sous forme de codes ASCII, pour les traduire en modes CHILL;
- la clé d'accès, dans une clause WHERE.

De plus, le module GRBD 3 réalise certaines transformations de tables, car pour des raisons de performances, le schéma des tables de chaque SGDTR peut différer un peu du schéma des tables du SGBDR. Par exemple, plusieurs colonnes d'une table du SGBDR peuvent être regroupées en une seule colonne dans une table de chacun des SGDTR, 6, etc.

Les modifications de données demandées dans chaque message de mise à jour sont réalisées dans la base de données 7, puis un acquittement est envoyé par le module GRBD3, au module GRBD2, dans le PCS-G 11, si ces modifications ont été éxécutées sans erreur. Si un évènement accompagne le message de mise à jour, le GRBD3 transmet cet évènement au programe 5 de service en temps réel.

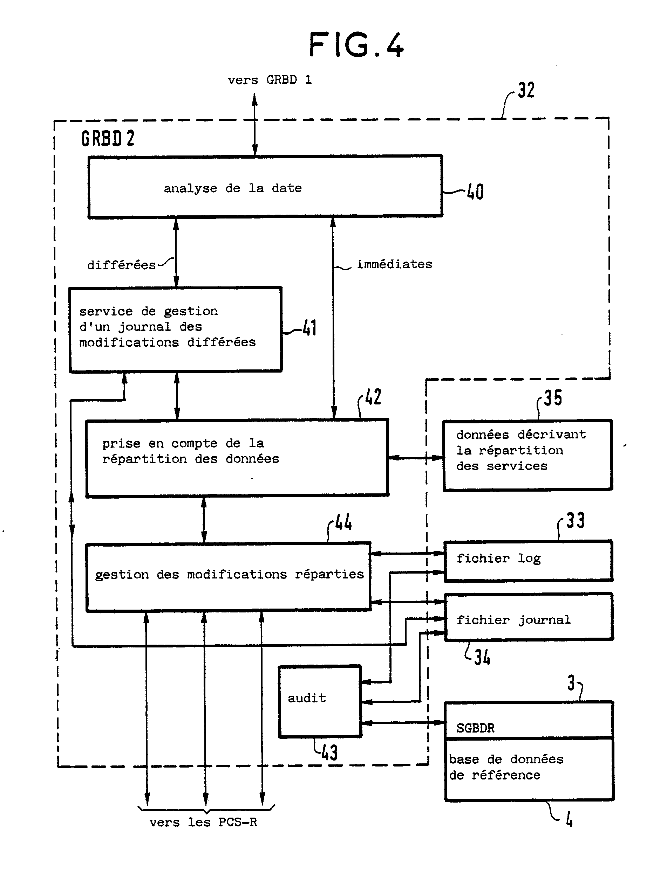

La figure 4 représente un schéma fonctionnel plus détaillé du GRBD 2, 32. Il comporte : un module 40 d'analyse de la date accompagnant une requête de modification; un module 41 assurant un service de gestion d'un journal des modifications différées; un module 42 de prise en compte de la répartition des données; un module d'audit 43; et un module 44 de gestion des modifications réparties dans les PCS-R.

Le module 40 analyse la date fixée pour l'exécution des modifications, car les bases de données des PCS-R ne sont pas nécessairement mises à jour immédiatement. La date est un paramètre contrôlé par les processus d'applications. Lorsque la date correspond à une exécution différée, les modifications sont traitées par le module 41. Lorsque la date d'exécution arrive, le module 41 transfert la requête de modification au module 42.

Le fichier journal 34 contient la liste des requêtes de modification à exécuter, classées par dates dûes. Il est rempli par le module 41 chaque fois qu'une date indique que l'exécution doit être différée. Le fichier journal 34 est vidé par le module 44, qui est activé à chaque fois qu'une requête de modification doit être transmise à un PCS-R par un système de gestion de temps, du système d'exploitation ATHOS. Après avoir traité toutes les requêtes pour une date donnée, le module 44 indique au système de gestion du temps la prochaine date à laquelle il doit être activé.

Le module 42 a pour fonction de déterminer la Piste des PCS-R dans lesquels il faut reporter des modifications de données, en fonction des données 35 décrivant la répartition des services, dans le PCS-R.

La répartition des données est décrite de la manière suivante. Pour chaque PCS-R, les données 35 contiennent la liste des services rendus par chaque PCS-R. Pour chaque service, les données 35 contiennent la liste des noms des tables qui contiennent les données permettant de rendre ce service. Pour chaque nom de table, les données 35 contiennent la liste des noms des tables qu'il faut mettre à jour, dans le cas où un service est rendu en partage de trafic entre différents PCS-R. Dans le cas où un service est rendu en partage de ressources, les données 35 contiennent en outre des critères de distribution sur la clé d'accès primaire; par exemple, tous les numéros inférieures à un numéro donné sont gérés dans un PCS-R, et tous les numéros supérieurs sont gérés dans un autre PCS-R.

Le module 44 a pour fonction d'assurer l'exécution des requêtes de modification dans tous les PCS-R dans lesquels il existe une copie totale ou partielle de la table à modifier. Lorsqu'une modification doit être reportée dans plusieurs PCS-R, le module 44 n'impose pas que les données de tous les PCS-R soient modifiées simultanément. Si, par exemple, un PCS-R est temporairement inacessible, les modifications sont néanmoins reportées dans toutes les autres PCS-R, sachant que l'indisponibilité prévisionnelle des liaisons et des noeuds du réseau intelligent respecte des normes téléphoniques déterminées.

La cohérence entre les différentes bases de données est donc une cohérence faible, mais la cohérence globale est garantie par le fichier log 33 et par le fichier journal 34. Le module 44 alloue une référence à chaque opération consistant à modifier les données dans tous les PCS-R concernés par un message de mise à jour.

Il envoie un message de modification à tous les PCS-R concernés. Il archive dans le fichier log 33 la référence de l'opération. L'opération reste mémorisée dans le fichier log 33 tant que le fichier journal 34 n'a pas enregistré un acquitement provenant de chacun des PCS-R concernés par la mise à jour en cours d'exécution.

Le module d'audit, 43, permet de vérifier la cohérence des données dans tout le réseau. Il demande la lecture de chaque table de la base de données de référence, 4, par blocs comportant un nombre de lignes fixé, et il construit des requêtes pour demander la lecture de ces mêmes lignes dans tous les PCS-R qui en contiennent une copie. Il effectue une comparaison en tenant compte du contenu du fichier journal 34 et du fichier log 33. Lorsqu'une incohérence est détectée, le module 43 informe l'exploitant du PCS-G et ne rétablit la cohérence que sur demande expresse de cet exploitant.

La portée de l'invention n'est pas limitée à l'exemple de mise en oeuvre décrit ci-dessus. En particulier, le procédé selon l'invention peut être mis en oeuvre dans des environnements correspondant à des systèmes d'exploitation connus autres que les systèmes ANIX et ATHOS.

## Revendications

1. Procédé de gestion d'un réseau de bases de données, comportant une base de données relationnelle (4) qui constitue une référence et au moins une base de données accessible en temps réel (7), les données de la base de données relationnelle (4) étant répliquées au moins en partie dans des bases de données accessibles en temps réel (7, 10);

   caractérisé en ce que pour permettre à un processus d'application (22 à 24) de modifier des données dans tout le réseau de bases de données, il consiste à :
   - envoyer du processus d'application (22 à 24), à un pool de processus serveurs (26, 27) d'un système d'exploitation de la base de données relationnelle (4), une requête de modification de données, en langage SQL;
   - assigner un processus serveur à cette requête pour toute la durée de son traitement;
   - envoyer du pool de processus serveurs (26, 27) à un système de gestion (3) de la base de données relationnelle (4), la requête de modification, en langage SQL dynamique; et exécuter cette requête;
   - déterminer les bases de données, accessibles en temps réel (7, 10), qui sont concernées par la requête de modification;
   - leur transférer cette requête sous une forme compatible avec un système de gestion (6) de chaque base de données concernée;
   - exécuter la requête de modification, dans chaque base de données concernée.

2. Procédé selon la revendication 1, caractérisé en ce qu'il consiste, en outre, à transférer des processus d'application (22 à 24) aux processus serveurs (26, 27) un paramètre permettant de différer l'exécution d'une requête de modification de données, dans les bases de données accessibles en temps réel (7, 10).

3. Procédé selon la revendication 1, caractérisé en ce que, pour assurer qu'une requête de modification est effectivement exécutée dans tout le réseau, il consiste à :
   - allouer une référence à chaque requête de modification;
   - archiver dans un fichier (33) la référence de la requête;
   - archiver dans un fichier (34) la désignation de chaque base de données, accessible en temps réels (7, 10), ayant signalé que ladite requête de modification a été exécutée dans cette dernière;
   - conclure que l'exécution de ladite requête de modification est achevée dans le réseau de bases de données lorsque toutes les bases de données concernées ont signalé que la dite requête de modification a été exécutée.

4. Procédé selon la revendication 3, caractérisé en ce que, pour garantir la cohérence des données dans tout le réseau, il consiste en outre à vérifier que le contenu de la base de données de référence (4) correspond au contenu des bases de données accessibles en temps réel (7, 10), compte tenu des informations stockées dans lesdits fichiers (33, 34).

# FIG.1

# FIG.2

processus d'application — 20

↕ SQL

GRBD — 21

messages ↕       SQL dynamique ↕

3 — SGBDR

4 — base de données de référence

autres SGDTR

SGDTR — 6

base de données temps réel — 7

SGDTR — 9

base de données temps réel — 10

# FIG.3

PCS-G ⌐11

⌐30

| processus application | processus application | processus application |
|---|---|---|
| 22 | 23 | 24 |

interface message ⌐25

GRBD1

| processus serveur ⌐26 | processus serveur ⌐27 |
|---|---|

28

3

SGBDR

base de données de référence

4

message SQL dynamique

environnement ANIX

environnement ATHOS

données décrivant la répartition des services 35

GRBD 2

⌐32

fichier log 33

fichier journal 34

message SQL dynamique

31    12

autres PCS-R

PCS-R

environnement ATHOS

GRBD 3 ⌐36

analyse des requêtes SQL

message primitive SGDTR

SGDTR 6

base de données temps réel 7

évènement

service temps réel 5

# FIG.4

vers GRBD 1

$\begion$ 32

GRBD 2

analyse de la date — 40

différées — immédiates

service de gestion
d'un journal des
modifications différées — 41

prise en compte de la
répartition des données — 42

données décrivant
la répartition
des services — 35

gestion des modifications réparties — 44

fichier log — 33

fichier journal — 34

audit — 43

SGBDR — 3

base de données
de référence — 4

vers les PCS-R

Office européen
des brevets

**RAPPORT DE RECHERCHE
EUROPEENNE**

Numéro de la demande

**EP 91 10 8567**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | HEWLETT-PACKARD JOURNAL, vol. 37, no. 12, décembre 1986, pages 33-48, Palo Alto, CA, US; A.S. BROWN et al.: "Data base management for HP precision architecture computers" <br> * Page 34, colonne 2, lignes 16-17; page 35, colonne 2, lignes 19-26; page 43, colonne 1, ligne 58 - page 43, colonne 2, ligne 3 * <br> − − − | 1,3-4 | G 06 F 15/40 |
| A | GB-A-2 201 270  (HITACHI LTD) <br> * Page 3, ligne 1 - page 4, ligne 27 * <br> − − − − − | 1,3-4 | |
| | | | **DOMAINES TECHNIQUES RECHERCHES (Int. Cl.5)** |
| | | | G 06 F 15/40 |

Le présent rapport de recherche a été établi pour toutes les revendications

| Lieu de la recherche | Date d'achèvement de la recherche | Examinateur |
|---|---|---|
| La Haye | 19 juillet 91 | KATERBAU R.E. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

-----------------------------------------------

& : membre de la même famille, document correspondant